# EUROPEAN PATENT APPLICATION

(11) **EP 1 126 733 A2**
(43) Date of publication of application: **22.08.2001**
(21) Application number: 01301305.7
(22) Date of filing: 15.02.2001
(51) Int. Cl.: H04Q 7/22, H04L 12/14

(54) **Accounting method**

(30) Priority: 15.02.2000 JP 2000041460
(71) Applicant: NEC CORPORATION, Tokyo (JP)
(72) Inventor: Chishima, Hiroshi, Minato-ku, Tokyo (JP)
(74) Representative: Moir, Michael Christopher

(57) **Abstract**

In a common carrier apparatus, a payer for calls can be switched over to an information provider. When information associated with an acquisition request sent from a portable terminal is information recorded in a payer information database, an accounting processing apparatus refers to the payer information database so as to inform an accounting server apparatus of the fact that the payer specified by payer information should be charged. It is thereby possible to perform an accounting processing on the payer specified by the payer information. Therefore, for example, by setting the information provider to be payer, it is possible to more easily provide a user of the portable terminal with information concerning a corporate advertisement, a product advertisement, or the like, over the Internet.

## Description

### BACKGROUND OF THE INVENTION

The present invention relates to a common carrier apparatus to which portable terminals and an information server apparatus are connected via a communication network, to an accounting processing method, and to a recording medium in which an accounting processing program is recorded.

### Description of the Related Art

Recently, a portable terminal that performs communications by using a wireless communication network has been proposed to provide a function of having access to an information server apparatus on a network (in particular, the Internet) so as to obtain information through the network.

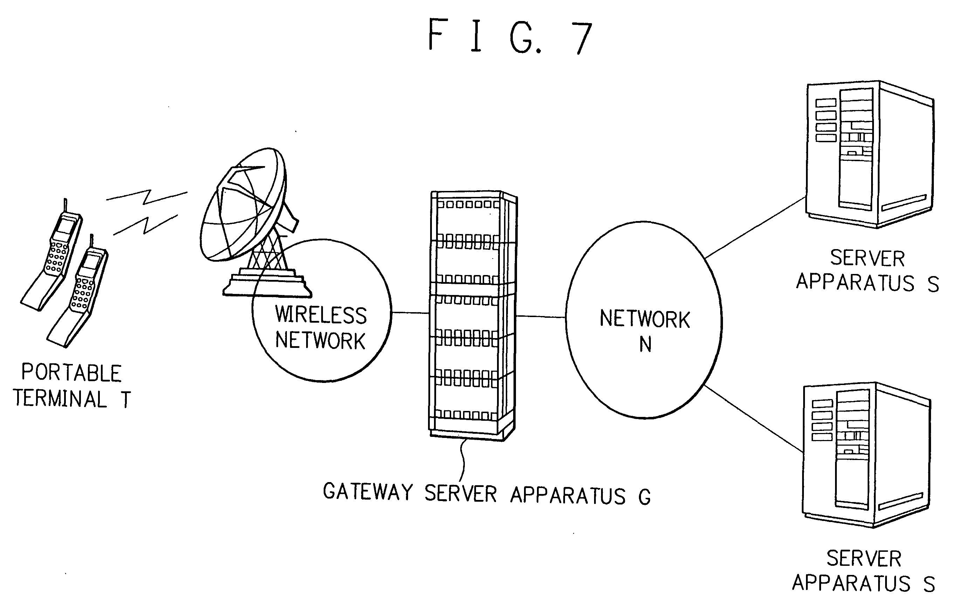

Fig. 7 shows by way of example a system construction in which a portable terminal T gains access to a server apparatus S on a network N. As shown in Fig. 7, a dedicated server apparatus referred to as a gateway server apparatus G is installed at an access point to the network N, so that the portable terminal T has access to the network N.

The gateway server apparatus G and portable terminal T are connected via a wireless communication network. For communications over the wireless communication network, a communication protocol called WAP (Wireless Application Protocol) is used, which is optimized for characteristics of the wireless communication network and portable terminal T. Between server apparatuses S on the network and the gateway server apparatus G, communication is made on the basis of a standard protocol for the network N. If the network N is the Internet, standard protocols for the Internet such as HTTP (HyperText Transfer Protocol), and TCP (Transmission Control Protocol) are used.

The gateway server apparatus G has the functions of a protocol conversion performed between a communication protocol for the WAP and the standard protocol used on the network N, and of a data conversion. The data conversion includes functions in which, when a document is stored in an HTML format in the server apparatus S on the network N, for example, the document in the HTML format is converted into a WML (Wireless Markup Language) format document, or when a WML document is stored in a text format in the server apparatus S on the network N, the document is then converted into a document in a binary format for a data compression.

However, as far as a method for billing charges for calls in a conventional packet-type information service using the portable terminal, a user of the portable terminal is charged a fee on the basis of the amount of data transmitted/received by the user's portable terminal. The user therefore has to pay for the entire information.

### SUMMARY OF THE INVENTION

A first aspect of the invention provides a common carrier apparatus to which portable terminals are connected through a wireless communication network and an information server apparatus is linked via a network, said common carrier apparatus having converting means for performing protocol conversion between a communication protocol adopted in said wireless communication network and a communication protocol used in said network, and accounting processing means for charging a communication fee required for communications between said portable terminals and said information server apparatus, said common carrier apparatus comprising: payer-information storage means for storing a first identification information associated with information specified by an information provider who provides said information server apparatus with said information, said first identification information being stored together with a payer information indicative of a payer of charges required to transfer said information; means for deciding whether an information acquisition request transferred from said portable terminals or information transferred from said information server apparatus has a specified payer, by comparing a second identification information contained in said information acquisition request or said information transferred from said information server apparatus, with said first identification information; and payer processing means for, if said information acquisition request or said information transferred from said information server apparatus has the specified payer, informing said accounting processing means of said second identification information and the payer specified by said payer information stored in said payer-information storage means, wherein said accounting processing means performs an accounting processing on the payer informed by said payer processing means.

In another aspect, there is provided a common carrier apparatus to which portable terminals are connected through a wireless communication network and an information server apparatus is linked via a network, said common carrier apparatus having converting means for performing protocol conversion between a communication protocol adopted in said wireless communication network and a communication protocol used in said network, and accounting processing means for charging a communication fee required for communications between said portable terminals and said information server apparatus; said common carrier apparatus comprising: payer-information storage means for storing a first identification information associated with information specified by an information provider who provides said information server apparatus with said information, said first identification information being stored together with a payer information indicative of a payer of charges required to transfer said information; means for deciding whether an information acquisition request transferred from said portable terminals or information transferred from said information server apparatus has a specified payer, by comparing a second identification information contained in said information acquisition request or said information transferred from said information server apparatus, with said first identification information; and inserting means for, if said information acquisition request or said information transferred from said information server apparatus has the specified payer, inserting said second identification information and a payer information indicative of a payer specified by said payer information stored in said payer-information storage means, into said information acquisition request or into said information transferred from said information server apparatus, wherein said accounting processing means refers to said inserted payer information and performs an accounting processing on said specified payer.

According to a third aspect, there is provided a common carrier apparatus to which portable terminals are connected through a wireless communication network and an information server apparatus is linked via a network, comprising: converting means for performing protocol conversion between a communication protocol adopted in said wireless communication network and a communication protocol used in said network; and accounting processing means for charging a communication fee required for communications between said portable terminals and said information server apparatus, wherein said accounting processing means refers to a payer information which has been previously inserted in information transferred from said information server apparatus and is indicative of a payer of rate for calls, and performs an accounting processing on a specified payer.

According to a fourth aspect, a processing method used in a common carrier apparatus is provided, where to the apparatus, portable terminals are connected through a wireless communication network and an information server apparatus is linked via a network, said common carrier apparatus having accounting processing means for charging a communication fee required for communications between said portable terminals and said information server apparatus, comprising the steps of: storing a first identification information associated with information specified by an information provider who provides said information server apparatus with said information, said first identification information being stored together with a payer information indicative of a payer of charges required to transfer said information; deciding whether an information acquisition request transferred from said portable terminals or information transferred from said information server apparatus has a specified payer, by comparing a second identification information contained in said information acquisition request or said information transferred from said information server apparatus, with said first identification information; designating a payer together with said second identification information, if said information acquisition request or said information transferred from said information server apparatus has the specified payer, wherein said payer has been specified by said payer information stored in said storing step; and performing an accounting processing on said payer designated in said designating step.

According to a fifth aspect, an accounting processing method used in a common carrier apparatus is provided, where to the apparatus, portable terminals are connected through a wireless communication network and an information server apparatus is linked via a network, said common carrier apparatus having accounting processing means for charging a communication fee required for communications between said portable terminals and said information server apparatus, comprising the steps of: storing a first identification information associated with information specified by an information provider who provides said information server apparatus with said information, said first identification information being stored together with a payer information indicative of a payer of charges required to transfer said information; deciding whether an information acquisition request transferred from said portable terminals or information transferred from said information server apparatus has a specified payer, by comparing a second identification information contained in said information acquisition request or said information transferred from said information server apparatus, with said first identification information; inserting said second identification information and a payer information indicative of a payer specified by said payer information stored in said storing step, into said information acquisition request or into said information transferred from said information server apparatus, if said information acquisition request or said information transferred from said information server apparatus has the specified payer; and performing an accounting processing on said specified payer with reference to said inserted payer information.

According to a sixth aspect, an accounting processing method used in a common carrier apparatus is provided, where to the apparatus, portable terminals are connected through a wireless communication network and an information server apparatus is linked via a network, comprising the steps of performing protocol conversion between a communication protocol adopted in said wireless communication network and a communication protocol used in said network; charging a communication fee required for communications between said portable terminals and said information server apparatus; and performing an accounting processing on a specified payer with reference to a payer information which has been previously inserted in information transferred from said information server apparatus and is indicative of said payer who pays rate for calls.

### BRIEF DESCRIPTION OF THE DRAWINGS

Preferred features of the present invention will now be described, by way of example only, with reference to the accompanying drawings, in which:-
Fig. 1 is a block diagram showing a construction of a first embodiment according to the present invention;
Fig. 2 is one example of a management table registered in a payer information database;
Fig. 3 is a flowchart showing operation with respect to an information request;
Fig. 4 is a flowchart showing operation of returning information;
Fig. 5 is a block diagram depicting a construction of a second embodiment according to the present invention;
Fig. 6 is a block diagram of a modified construction of the second embodiment; and,
Fig. 7 is a diagram for explaining a method in which a portable terminal has access to a network.

### DESCRIPTION OF THE PREFERRED EMBODIMENTS

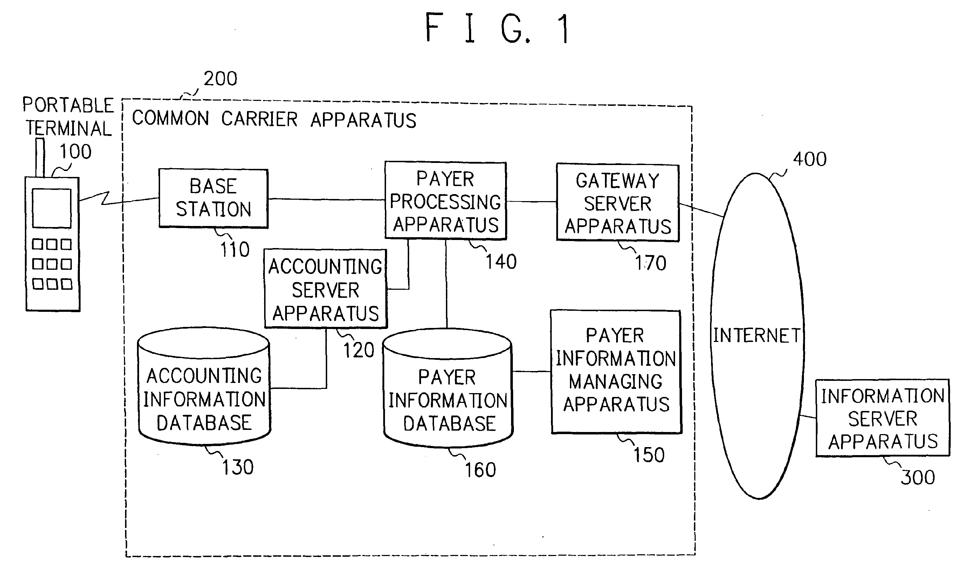

A detailed description will now be given of embodiments according to the present invention of a common carrier apparatus for wirelessly connecting portable terminals and providing communications for these terminals, of an accounting processing method, and of a recording medium in which accounting processing program codes are recorded, with reference to the accompanying drawings. Figs. 1 to 6 show the embodiments of the common carrier apparatus, the processing method, and the recording medium according to the present invention.

### First Embodiment:

Referring now to Fig. 1, a detailed description will be given of a first embodiment according to the present invention. Fig. 1 shows a system construction of the first embodiment according to the present invention. It should be noted that the embodiment associated with the recording medium in which an accounting processing program is recorded can be implemented by residing into components (which will be described later) a recording medium on which a control program for executing operations as described below is recorded. The recording medium may include a semiconductor memory, an optical disk, a magneto-optical disk, a magnetic recording medium, or the like.

As shown in Fig. 1, the system according to the first embodiment of the present invention includes a portable terminal 100 carried by a portable terminal user, a common carrier apparatus 200 for wirelessly connecting the portable terminal and providing communications with the portable terminal, and an information provider's information server apparatus 300 set up on a network 400 (which is the Internet in the present embodiment). The common carrier apparatus 200 includes a portable-terminal base station 110, a charging (accounting) server apparatus 120, a charging (accounting) information database 130, an apparatus 140 for executing a processing with regard to a payer, a managing apparatus 150 for managing information on those who are charged for a call (that is, a payer), a database 160 for storing information on those who are charged for a call, and a gateway server apparatus 170 to provide intermediary between the wireless communication network and the Internet.

Information transmitted from the portable terminal 100 is received by the portable-terminal base station 110 of the common carrier apparatus 200, and is then transferred from the gateway server apparatus 170 to the information server apparatus 300 on the Internet through the processing apparatus 140.

Contrarily, information transferred from the information server apparatus 300 on the Internet is received by the gateway server apparatus 170, and is transferred from the base station 110 to the portable terminal 100 via the processing apparatus 140. Furthermore, the processing apparatus 140 is connected to the accounting server apparatus 120 and the payer information database 160. The accounting server apparatus 120 is connected to the accounting information database 130 that keeps information on the accounting. The payer information database 160 is connected to the managing apparatus 150 that administers and manages the payer information database 160.

The portable terminal 100 includes a terminal using the wireless communication network for communications, such as PHS (Personal Handy-Phone System) or a cellular telephone. The portable terminal 100 has the functions of exchanging information or an electronic mail over the Internet. For the data communications, a packet communication is used which utilizes a communication protocol known as WAP (Wireless Application Protocol) optimized for characteristics of the wireless communication network and portable terminal.

The portable-terminal base station 110 has the function of communicating with the portable terminal 100 via the wireless communication network. The accounting server apparatus 120 has the functions of charging a fee on the basis of the amount of information dealt by the portable terminal in a packet-type information service, and of managing the accounting information database 130.

The accounting information database 130 is provided with prescribed number information for identifying those who are charged a fee (that is, a payer, not shown in the figure), an accounting meter showing a accounting state of each number information, and so forth. The accounting meter is managed by the accounting server apparatus 120.

The processing apparatus 140 refers to the payer information database 160 to decide the payer, and informs the accounting server apparatus 120 of the decision result. The managing apparatus 150 that manages information on the payer has the functions of recording in the payer information database 160 information on data specified by the information provider, by associating the objective data information with a payer information indicative of the information provider, and of managing the objective data information.

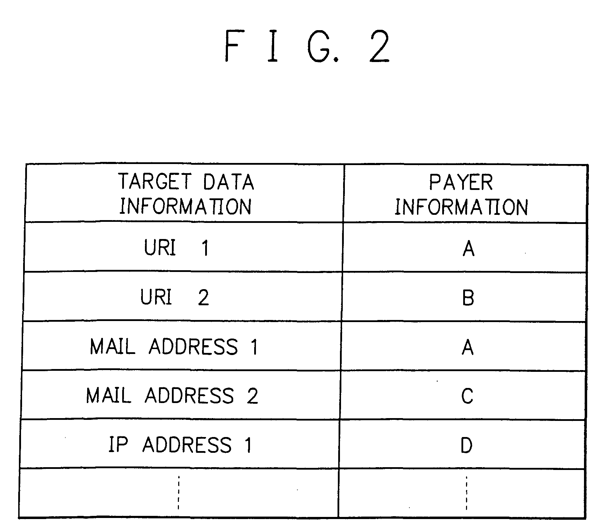

As shown in Fig. 2, the payer information database 160 stores information indicative of data regarding those who are targeted as a payer for a call (hereinafter referred to as a target data information such as URI (Universal Resource Identifier) including URL (Uniform Resource Locator), IP (Internet Protocol) address, and an electronic-mail address), and information showing the payer for a call (hereinafter referred to as a payer information).

It is an object of the system according to the present embodiment with the above-mentioned construction to provide a packet accounting system which enables the information provider, instead of the user of the portable terminal, to be a target who is charged for a call in a packet-type information service using the portable terminal.

For the purpose of achieving the object, the information provider registers in advance in the payer information database 160 of the common carrier apparatus 200, the target data information indicating data that is a target for which a call should be paid, and payer information showing the payer of charges for calls.

The processing apparatus 140 of the common carrier apparatus 200 refers to the payer information database 160 to decide a payer of charges for calls with respect to information corresponding to the target data information, thus informing the accounting server apparatus 120 of the decision result. The accounting server apparatus 120 then charges the payer rate for a call which has been required to obtain the information, according to the informed result.

With the above processing, it is capable of changing a payer from the user of the portable terminal to the information provider.

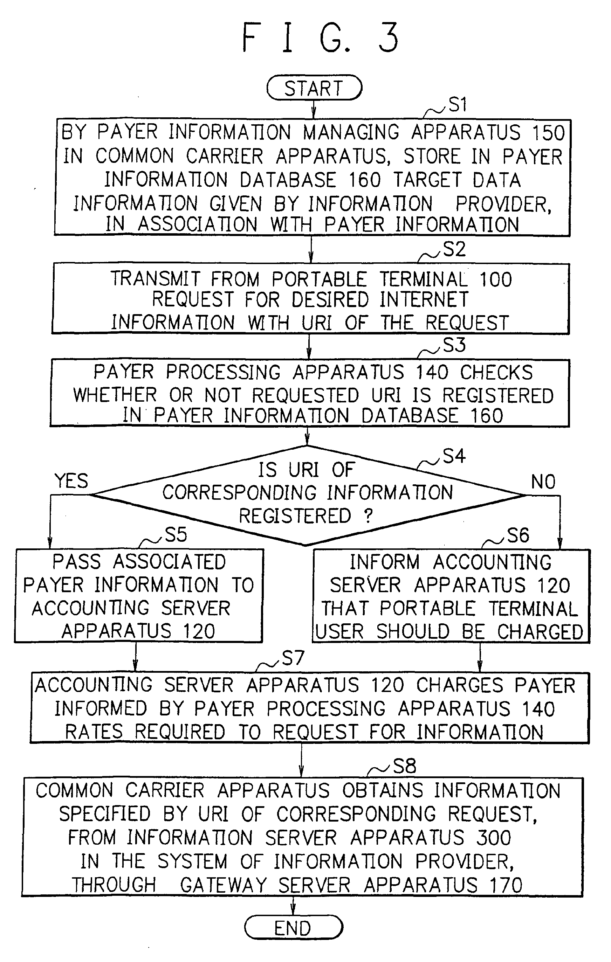

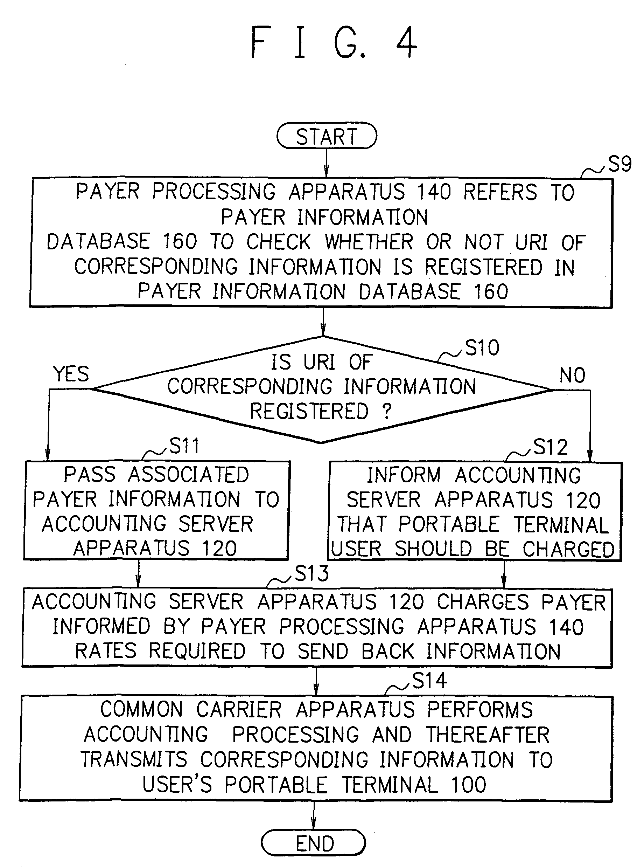

A description will now be given of a sequence of steps of processing in the present embodiment having the above-mentioned construction, with reference to flowcharts shown in Figs. 3 and 4. It is noted that a processing discussed below is related, by way of example, to a case where the user browses information on the Internet specified by the URI.

First, as a preparation for the service, the information provider registers in step S1 the target data information (URI) and payer information in the common carrier apparatus 200 as shown in Fig. 3. The common carrier apparatus 200 stores, by using the managing apparatus 150, in the payer information database 160 the target data information given by the information provider, in association with the payer information indicative of the information provider.

Subsequently, during the operation of the packet-type information service, the portable terminal user sends a request for Internet information desired to be referred by the user, with the URI of this information (in step S2). The common carrier apparatus 200 receives the request from the portable terminal 100 to carry out an accounting processing with regard to packet(s) used for catering to the request. In step S3, the processing apparatus 140 examines whether or not the requested URI is registered in the payer information database 160.

If the URI is registered in the database 160, that is, YES in step S4, the processing apparatus 140 passes on to the accounting server apparatus 120 the associated payer information registered in the payer information database 160, in step S5. If not (NO in step S4), the accounting server apparatus 120 is informed that the portable terminal user should be charged a fee, in step S6.

In step S7, the accounting server apparatus 120 charges the payer informed by the processing apparatus 140 for a call required to request the Internet information.

The common carrier apparatus 200 obtains via the gateway server apparatus 170, information specified by the requested URI, from the information server apparatus 300 included in an apparatus of the information provider.

Referring now to a flowchart shown in Fig. 4, a description will be given of the steps of returning the information obtained via the gateway server apparatus 170, to the portable terminal user.

Upon acquisition of the information from the information server apparatus 300 via the gateway server apparatus 170, the processing apparatus 140 of the common carrier apparatus 200 refers to the payer information database 160 in step S9, to check whether or not the URI associated with the information is registered in the database 160.

If the URI is registered in the database, YES in step S10, the processing apparatus 140 informs in step S11 the accounting server apparatus 120 of the associated payer information. If not, that is, NO in step S10, the processing apparatus 140 instructs in step S12 the accounting server apparatus 120 to charge a fee to the portable terminal user.

In step S13, the accounting server apparatus 120 charges the payer informed by the processing apparatus 140 for a call required for returning the Internet information. The common carrier apparatus 200 carries out an accounting processing, and then transmits the information to the user's portable terminal 100 in step S14. The user of the portable terminal 100 can therefore browse the downloaded information through his/her own terminal.

With the above processing, if the URI specified by the portable terminal is the URI registered by the information provider, the information provider is charged for a call with respect to transmission and reception of the data. Accordingly, it becomes easy to provide the user of the portable terminal with information concerning a corporate advertisement, a product advertisement, or the like, over the Internet. It also becomes easy to send to the portable terminal user an electronic mail or a direct mail regarding a corporate advertisement, a product advertisement, or the like.

### Second Embodiment:

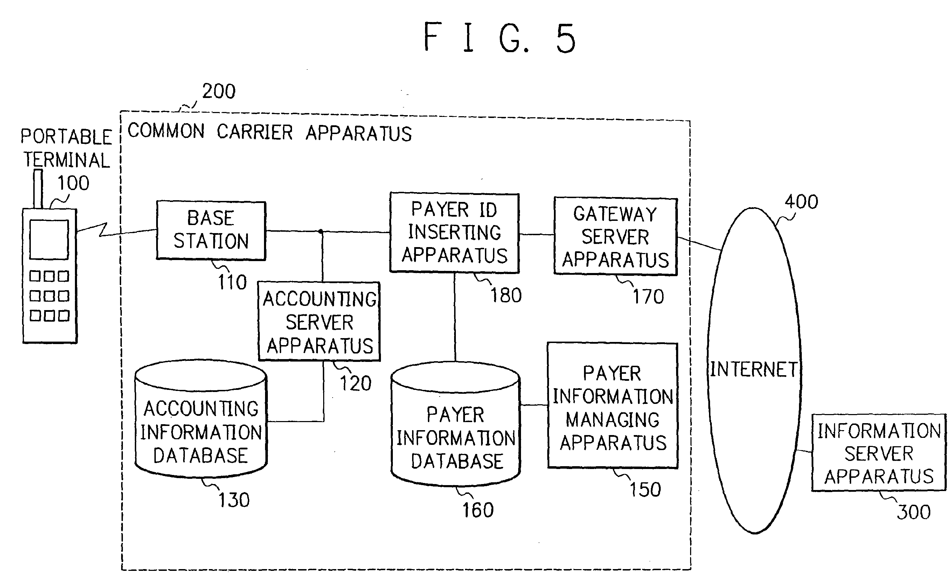

A description will now be given of a second embodiment of the present invention with reference to Fig. 5. The same reference numerals are used for component parts identical with those in the first embodiment, in the description of the second embodiment.

As shown in Fig. 5, in the second embodiment of the present invention, the common carrier apparatus 200 has an apparatus 180 for inserting an ID of those who are charged for a call (that is, a payer), in place of the processing apparatus 140 as used in the apparatus 200 according to the first embodiment. The accounting server apparatus 120 of the present embodiment is connected to a line that provides connection between a base station 110 and the inserting apparatus 180.

As described above with respect to the first embodiment, the processing apparatus 140 determines a payer who is charged for a call, and informs directly the accounting server apparatus 120 of information concerning the payer, so as to implement switching of payers.

Unlike the first embodiment, the inserting apparatus 180 of the second embodiment refers to the database 160 to determine the payer, and inserts accounting information indicative of the payer, inside packet(s) to be transmitted to the portable terminal 100. The accounting server apparatus 120 refers to the payer information inserted in the packet in order to perform switching of the payers.

In this case, no information is directly exchanged between an apparatus for discriminating the payer for a call (which corresponds in the present embodiment, to the inserting apparatus) and the accounting server apparatus 120.

It should be noted that the apparatus for discriminating the payer for a call (that is, the apparatus for inserting an ID according to the present embodiment) may be provided anywhere in the preceding stage where the packet is processed by the accounting server apparatus 120. For example, in order to perform switching of payers in response to an information acquisition request sent from the portable terminal 100 to the information server apparatus, the apparatus 180 for inserting an ID may be arranged in the stage preceding the accounting server apparatus that charges a fee to the information acquisition request.

Similar to the first embodiment, the information provider is charged for a call with respect to transmission and reception of data, if the URI specified by the portable terminal is the URI registered by the information provider.

Consequently, the information provider is responsible for paying for a call required to browse the Internet information by using the portable terminal. Therefore this makes it easy to provide information concerning a corporate advertisement, a product advertisement, or the like, to the user of the portable terminal over the Internet.

Furthermore, as for reception of an electronic mail by the portable terminal, a transmitting side of an electronic mail may be subjected to pay for a call. As a result, it is also possible to easily send to the portable terminal user an electronic mail or a direct mail regarding a corporate advertisement, a product advertisement, or the like.

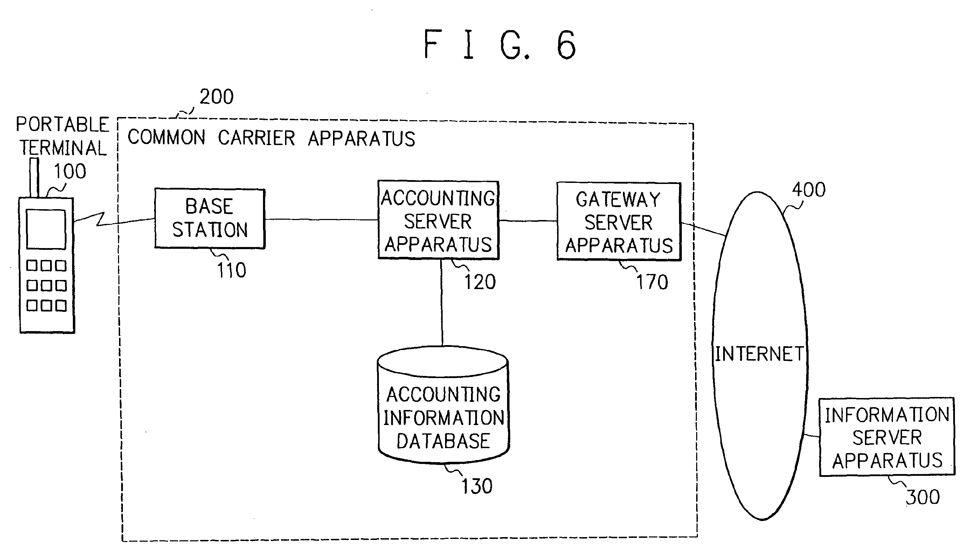

The second embodiment can be modified as follows. In the second embodiment, insertion or imbedding of the payer information showing the payer, is performed in the common carrier apparatus 200. However, the common carrier apparatus 200 may be arranged to refer to the payer information previously inserted in the packet, and then carry out an accounting processing for a specified payer. In this case, as shown in Fig. 6, the accounting server apparatus 120 directly carries out switching of payers in accordance with information that has been transferred from the information server apparatus 300 and received by the gateway server apparatus 170.

By way of example, insertion of the payer information into the packet outside the common carrier apparatus 200 can be done when the information server apparatus 300 transfers the requested information to the gateway server apparatus 170.

In the above embodiments, description has been made on the assumption that a user browses information on the Internet specified by the URI. However, it is understood that this construction does not impose a limitation on the present invention. The present invention may be applied to a wide-area network (WAN), a local-area network (LAN), and so forth.

If the target data information is an electronic-mail address, both a destination address and a sender's address may be registered, together with the payer information, in the payer information database 160. In this construction, the processing apparatus 140 may refer to the electronic-mail addresses so as to determine the payer.

If the target data information is an IP address, both a destination IP address and a source IP address may be registered in the payer information database 160, together with the payer information. In this case, the processing apparatus 140 may refer to the IP addresses so as to determine the payer.

From the forgoing description, it is readily apparent that a common carrier apparatus according to the present invention stores a first identification information associated with information specified by an information provider who provides the information server apparatus with the information, and the first identification information is stored together with payer information indicative of a payer of charges required to transfer said information. The apparatus decides whether an information acquisition request transferred from the portable terminal or information transferred from the information server apparatus has a specified payer, by comparing a second identification information contained in the information acquisition request or the information transferred from the information server apparatus, with the first identification information.

Therefore, if the information acquisition request or the information transferred from the information server apparatus has the specified payer, the common carrier apparatus performs a payer processing for informing of the second identification information and the payer specified by said payer information.

Accordingly, it is possible to perform an accounting processing on the payer informed by the payer information.

Furthermore, a common carrier apparatus according to the present invention decides whether a second information acquisition request transferred from portable terminals or information transferred from an information server apparatus has a specified payer, by comparing an identification information contained in the information acquisition request or the information transferred from the information server apparatus, with a first identification information, and if the information acquisition request or the information transferred from the information server apparatus has the specified payer, the common carrier apparatus inserts the second identification information and a payer information indicative of a payer specified by the payer information, into the information acquisition request or into the information transferred from the information server apparatus.

The common carrier apparatus is therefore capable of performing an accounting processing on the specified payer with reference to the inserted payer information.

According to the present invention, it is possible for the information provider to be responsible for payment for a call required to browse the Internet information by using the portable terminal. This makes it easier for the user of the portable terminal to be provided with information concerning a corporate advertisement, a product advertisement, or the like, over the Internet.

Furthermore, a transmitter of an electronic mail may be subjected to payment for a call with respect to reception of an electronic mail by the portable terminal. This results in an easy distribution of an electronic mail or a direct mail regarding a corporate advertisement, a product advertisement, or the like, to the portable terminal user.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

In a common carrier apparatus, a payer for calls can be switched over to an information provider. When information associated with an acquisition request sent from a portable terminal is information recorded in a payer information database, an accounting processing apparatus refers to the payer information database so as to inform an accounting server apparatus of the fact that the payer specified by payer information should be charged. It is thereby possible to perform an accounting processing on the payer specified by the payer information. Therefore, for example, by setting the information provider to be payer, it is possible to more easily provide a user of the portable terminal with information concerning a corporate advertisement, a product advertisement, or the like, over the Internet.

## Claims

1. A common carrier apparatus, to which portable terminals are connected through a wireless communication network and an information server apparatus is linked via a network, comprising:
converting means for performing protocol conversion between a communication protocol adopted in said wireless communication network and a communication protocol used in said network; and,
accounting processing means for charging a communication fee required for communications between said portable terminals and said information server apparatus;
wherein said accounting processing means refers to payer information which has been previously inserted in information transferred from said information server apparatus and is indicative of a payer for calls, and performs an accounting processing on a specified payer.

2. A common carrier apparatus as in claim 1, comprising:
payer-information storage means for storing a first identification information associated with information specified by an information provider who provides said information server apparatus with said information, said first identification information being stored together with a payer information indicative of a payer of charges required to transfer said information;
means for deciding whether an information acquisition request transferred from said portable terminals or information transferred from said information server apparatus has a specified payer, by comparing a second identification information contained in said information acquisition request or said information transferred from said information server apparatus, with said first identification information; and
payer processing means for, if said information acquisition request or said information transferred from said information server apparatus has the specified payer, informing said accounting processing means of said second identification information and the payer specified by said payer information stored in said payer-information storage means;
wherein said accounting processing means performs an accounting processing on the payer informed by said payer processing means.

3. A common carrier apparatus as in claim 1, comprising:
payer-information storage means for storing a first identification information associated with information specified by an information provider who provides said information server apparatus with said information, said first identification information being stored together with a payer information indicative of a payer of charges required to transfer said information;
means for deciding whether an information acquisition request transferred from said portable terminals or information transferred from said information server apparatus has a specified payer, by comparing a second identification information contained in said information acquisition request or said information transferred from said information server apparatus, with said first identification information; and
inserting means for, if said information acquisition request or said information transferred from said information server apparatus has the specified payer, inserting said second identification information and payer information indicative of a payer specified by said payer information stored in said payer-information storage means, into said information acquisition request or into said information transferred from said information server apparatus;
wherein said accounting processing means refers to said inserted payer information and performs an accounting processing on said specified payer.

4. A common carrier apparatus according to claim 2 or 3, further comprising accounting managing means for registering, in said payer-information storage means, identification information and payer information, with respect to information registered in said information server apparatus.

5. A common carrier apparatus according to claim 2 or 3, wherein said first and second identification information include any one of Universal Resource Identifier (URI), Uniform Resource Locator (URL), an Internet Protocol (IP) address, and an electronic-mail address.

6. An accounting processing method used in a common carrier apparatus to which portable terminals are connected through a wireless communication network and an information server apparatus is linked via a network, comprising the steps of:
performing protocol conversion between a communication protocol adopted in said wireless communication network and a communication protocol used in said network;
charging a communication fee required for communications between said portable terminals and said information server apparatus; and,
performing an accounting processing on a specified payer with reference to payer information which has been previously inserted in information transferred from said information server apparatus and is indicative of said payer who pays for calls.

7. An accounting processing method as in claim 6, comprising the steps of:
storing first identification information associated with information specified by an information provider who provides said information server apparatus with said information, said first identification information being stored together with payer information indicative of a payer of charges required to transfer said information;
deciding whether an information acquisition request transferred from said portable terminals or information transferred from said information server apparatus has a specified payer, by comparing second identification information contained in said information acquisition request or said information transferred from said information server apparatus, with said first identification information;
designating a payer together with said second identification information, if said information acquisition request or said information transferred from said information server apparatus has the specified payer, wherein said payer has been specified by said payer information stored in said storing step; and,
performing accounting processing on said payer designated in said designating step.

8. An accounting processing method as in claim 6, comprising the steps of:
storing first identification information associated with information specified by an information provider who provides said information server apparatus with said information, said first identification information being stored together with payer information indicative of a payer of charges required to transfer said information;
deciding whether an information acquisition request transferred from said portable terminals or information transferred from said information server apparatus has a specified payer, by comparing second identification information contained in said information acquisition request or said information transferred from said information server apparatus, with said first identification information;
inserting said second identification information and payer information indicative of a payer specified by said payer information stored in said storing step, into said said information acquisition request or into said information transferred from said information server apparatus, if said information acquisition request or said information transferred from said information server apparatus has the specified payer; and,
performing accounting processing on said specified payer with reference to said inserted payer information.

9. An accounting processing method according to claim 7 or 8, further comprising a step of managing accounting so as to register identification information and payer information with respect to information registered in said information server apparatus.

10. , A computer program product comprising a computer-usable medium having computer readable program code means embodied in said medium for performing an accounting processing in a common carrier apparatus to which portable terminals are connected through a wireless communication network and an information server apparatus is linked via a network, said computer program product including:
computer readable program code means for performing protocol conversion between a communication protocol adopted in said wireless communication network and a communication protocol used in said network;
computer readable program code means for charging a communication fee required for communications between said portable terminals and said information server apparatus; and
computer readable program code means for performing an accounting processing on a specified payer with reference to a payer information which has been previously inserted in information transferred from said information server apparatus and is indicative of said payer who pays rate for calls.

11. A computer program product as in claim 10, including:
computer-readable program code means for storing first identification information associated with information specified by an information provider who provides said information server apparatus with said information, said first identification information being stored together with payer information indicative of a payer of charges required to transfer said information;
computer-readable program code means for deciding whether an information acquisition request transferred from said portable terminals or information transferred from said information server apparatus has a specified payer, by comparing second identification information contained in said information acquisition request or said information transferred from said information server apparatus, with said first identification information;
computer-readable program code means for designating a payer together with said second identification information, if said information acquisition request or said information transferred from said information server apparatus has the specified payer, wherein said payer has been specified by said payer information; and,
computer-readable program code means for performing an accounting processing on said designated payer.

12. A computer program product as in claim 10, including:
computer-readable program code means for storing first identification information associated with information specified by an information provider who provides said information server apparatus with said information, said first identification information being stored together with payer information indicative of a payer of charges required to transfer said information;
computer-readable program code means for deciding whether an information acquisition request transferred from said portable terminals or information transferred from said information server apparatus has a specified payer, by comparing second identification information contained in said information acquisition request or said information transferred from said information server apparatus, with said first identification information;
computer-readable program code means for inserting said second identification information and payer information indicative of a payer specified by said payer information, into said information acquisition request or into said information transferred from said information server apparatus, if said information acquisition request or said information transferred from said information server apparatus has the specified payer; and,
computer-readable program code means for performing an accounting processing on said specified payer with reference to said inserted payer information.
